# EUROPÄISCHE PATENTANMELDUNG

(11) **EP 2 632 170 A2**
(43) Veröffentlichungstag der Anmeldung: **28.08.2013**
(21) Anmeldenummer: 13000068.0
(22) Anmeldetag: 08.01.2013
(51) Int. Cl.: H04Q 9/00

(54) **Vorrichtung zur Leckortung in einem verzweigten Leitungssystem eines Wassernetzes**

(30) Priorität: 22.02.2012 DE 102012003459
(71) Anmelder: Seba-Dynatronic Mess- und Ortungstechnik GmbH, 96148 Baunach (DE)
(72) Erfinder: Schuberth, Harald, 96149 Breitengüßbach (DE)
(74) Vertreter: Riebling, Peter

(57) **Zusammenfassung**

Vorrichtung zur Leckortung in einem verzweigten Leitungssystem (1) eines Wassernetzes mit einer Vielzahl von Leckortungsgeräten (9-11), die an verschiedenen Stellen an den Wasserleitungen (2, 3) eine Leckortung, z. B. über eine akustische Erfassung des Strömungsgeräusches und/oder den Druck und/oder den Durchfluss ermöglichen, wobei die Leckortung über mindestens einen Sensor (12) mit einem daran angeschlossenen Meßteil (13) und einem Auswertungsteil (14) erfolgt, und eine Kommunikationsverbindung (17) zur Weiterleitung der erfassten Signale und/oder Daten auf das Display (21) eines Benutzer-Endgerätes (20) vorhanden ist, wobei die Kommunikationsverbindung (17) als WLAN-Verbindung zwischen dem Leckortungsgerät (9-11) und dem Benutzer-Endgerät (20) ausgebildet ist, und dem Benutzer-Endgerät (20) ein internetfähiger Webbrowser zugeordnet ist.

## Beschreibung

Die Erfindung betrifft eine Vorrichtung zur Leckortung in einem verzweigten Leitungssystem eines Wassernetzes mit einer Vielzahl von Leckortungsgeräten, die an verschiedenen Stellen an den Wasserleitungen über dort angeordnete Sensoren eine Leckortung ermöglichen.

Die Leckortung erfolgt beispielsweise über eine akustische Erfassung des Strömungsgeräusches und/oder den Druck und/oder den Durchfluss, wobei die Leckortung über mindestens einen Sensor mit einem daran angeschlossenen Meßteil und einem Auswertungsteil erfolgt, und eine Kommunikationsverbindung zur Weiterleitung der erfassten Signale und/oder Daten auf das Display eines Benutzer-Endgerätes vorhanden ist

Zur Steuerung der Messgeräte oder zur Visualisierung der Messergebnisse werden in der Wasserleckortung bisher spezielle Geräte mit eigener Software und speziell angepasstem Display verwendet. Alternativ werden PC-Basierte Systeme mit einer direkten Schnittstelle zur Messelektronik des Leckortungsgerätes verwendet.

Alle diese bekannten Leckortungsgeräte haben den Nachteil, dass die Software für die Benutzeroberfläche nur für ein bestimmtes Betriebssystem entwickelt wurde und auf anderen Endgeräten nicht lauffähig ist. Wird beispielsweise Software für einen PC mit dem Betriebssystem "Windows 7" geschrieben, so läuft diese Software nicht unter anderen Betriebssystemen wie z. B. "Android" oder "MC OS" oder "iOS", "Linux" und dergleichen.

Der Erfindung liegt deshalb die Aufgabe zugrunde eine Vorrichtung zur Leckortung der eingangs genannten Art so weiterzubilden, dass eine plattformunabhängige Übertragung der Daten und eine Visualisierung der Daten am Endgerät möglich ist. Zur Lösung der gestellten Aufgabe ist die Erfindung durch die technische Lehre des Anspruches 1 gekennzeichnet.

Wesentliches Merkmal der Erfindung ist, das in dem Leckortungsgerät eine Mess- und Steuerelektronik angeordnet ist, die als Server einer WLAN-Verbindung ausgebildet ist und das ferner im Benutzerendgerät der Empfänger der WLAN-Verbindung angeordnet ist und mit einem internetfähigen Webbrowser kombiniert ist.

Damit werden über das im Benutzerendgerät angeordnete WLAN/WiFi-Interface eine Schnittstelle zu einer Benutzeroberfläche zur Verfügung gestellt und die Daten so aufbereitet, dass sie mit einem im Endgerät angeordneten internetfähigen Browser visualisiert werden können und gleichzeitig von dort aus auch verschiedene Steuerfunktionen ausgeführt werden können.

Die Benutzeroberfläche (Steuerung- und Visualisierung von Daten und Prozessen) wird auf dem Benutzerendgerät BE abgebildet. Dieses Endgerät kann z. B. ein Smartphone, TouchPad, PC, oder Ähnliches sein. Es muss lediglich ebenfalls ein WLAN/WiFi-Modul enthalten und einen internetfähigen Webbrowser.

Damit ist das BE unabhängig vom verwendeten Betriebssystem (derzeit verwendet beispielsweise MS Windows, Mac OS, iOS, Linux, Android).

Neu an dem System ist, dass die Kommunikation zwischen einem Benutzerendgerät mit Display (z.B. PC, Notebook, Smartphone, Touchpad) und der Messelektronik über WLAN/WiFi und einen auf der Messelektronik implementierten Webserver läuft. Damit wird das System vollkommen unabhängig vom Betriebssystem im verwendeten Endgerät.

Im Mittelpunkt der vorliegenden Erfindung steht also die plattformunabhängige Verarbeitung und Visualisierung der Daten der Leckortungsgeräte im Benutzerendgerät (Windows, Linux, Mac OS, iOS, Android). Die Sendeeinheiten der Leckortungsgeräte stellen nämlich ihre Daten über einen integrierten Webserver zur Verfügung, so dass im Benutzerendgerät ein einfacher Webbrowser vollkommen ausreicht. Es handelt sich dabei aber grundsätzlich um eine Direktverbindung zwischen Sendeeinheiten und Benutzerendgerät, öffentliche Netze (Internet, etc.) werden hier nicht verwendet.

Die Begriffe WLAN und WiFi werden hierbei Synonym benutzt.

Wi-Fi bezeichnet sowohl ein Firmenkonsortium, das Geräte mit Funk-Schnittstellen zertifiziert, als auch den zugehörigen Marken-Begriff.

Weil der Begriff WiFi Synonym mit dem Begriff WLAN im Rahmen der vorliegenden Anmeldung verwendet wird, wird der einfacheren Beschreibung wegen nur noch der Begriff WLAN weiterverwendet.

Bei einem WLAN-Netz handelt es sich um ein lokales Funknetz, das in der Regel nach dem Standart IEEE-802.11-Familie arbeitet.

Im Gegensatz zum Wireless Personal Area Network (WPAN) haben WLANs größere Sendeleistungen und Reichweiten und bieten im Allgemeinen höhere Übertragungsraten.

WLANs stellen Anpassungen der Schicht 1 und 2 des OSI-Referenzmodels dar, wohingegen in WPANs z. B. über eine im Netzwerkprotokoll vorgesehene Emulation der seriellen Schnittstelle und PPP bzw. SLIB eine Netzverbindung aufgebaut wird. Beim WLAN kommt in der Regel das Modulationsverfahren OFDM zum Einsatz.

In einer bevorzugten Ausgestaltung der vorliegenden Erfindung arbeitet das erfindungsgemäße WLAN-Netz im Ad-hoc-Modus. In diesem Modus ist keine Station besonders ausgezeichnet, sondern alle sind gleichwertig.

Die Voraussetzungen für den Ad-hoc-Modus sind dieselben wie für den Infrastruktur-Modus: Alle Stationen benutzen denselben Netzwerknamen ("Service Set Identifier", SSID) und optional dieselben Einstellungen für die Verschlüsselung. Da es in einem Ad-hoc-Netz keine zentrale Instanz (Access Point) gibt, muss deren koordinierende Funktion von den Endgeräten übernommen werden. Eine Weiterleitung von Datenpaketen zwischen den Stationen ist nicht vorgesehen und in der Praxis auch nicht ohne weiteres möglich, denn im Ad-hoc-Modus werden keine Informationen ausgetauscht, die den einzelnen Stationen einen Überblick über das Netzwerk geben könnten. Aus diesen Gründen eignet sich der Ad-hoc-Modus nur für eine sehr geringe Anzahl von Stationen (Leckortungsgeräten), die sich wegen der begrenzten Reichweite der Sender zudem physisch nahe beieinander befinden müssen. Ist das nicht der Fall, kann es vorkommen, dass eine Station nicht mit allen anderen Stationen kommunizieren kann, da diese schlicht kein Signal mehr empfangen.

Um dieses Problem zu beheben, können die teilnehmenden Stationen mit Routing-Fähigkeiten ausgestattet werden, so dass sie in der Lage sind, Daten zwischen Geräten weiterzuleiten, die sich nicht in Sendereichweite zueinander befinden. Erhebung und Austausch von Routing-Informationen ist Teil der Aufwertung eines Ad-hoc-Netzwerks zum mobilen Ad-hoc-Netzwerk: Softwarekomponenten auf jeder Station sammeln Daten (z. B. zur "Sichtbarkeit" anderer Stationen, Verbindungsqualität etc.), tauschen sie untereinander aus und treffen Entscheidungen für die Weiterleitung der Nutzdaten.

Nach einer bevorzugten Ausgestaltung der vorliegenden Erfindung arbeitet das erfindungsgemäße WLAN-Netz nach dem Standard IEEE 802.11a/h oder dem Standard IEEE 802.11 b/g/n. Die Verwendung neuerer Standards, die bisher noch nicht verwendet wurden, fällt in den Schutzbereich der Erfindung. Deshalb sind die vorher angegebenen Standards nur beispielhaft zu verstehen.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

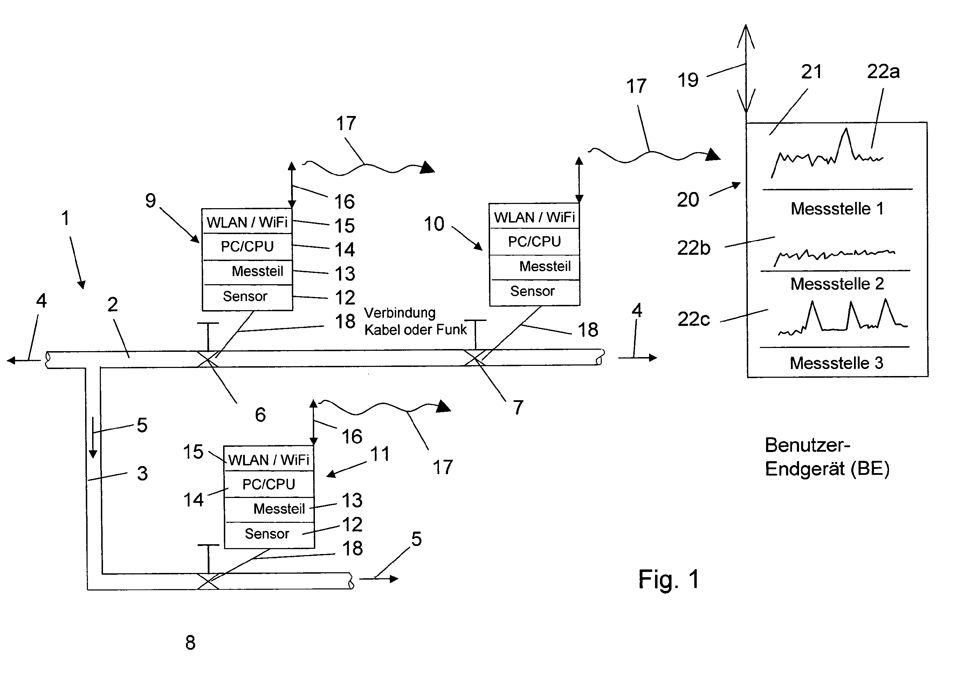

- Figur 1:: Schematisiertes Blockschaltbild einer Datenübertragung zwischen den Leckortungsgeräten und einem Benutzerendgerät
- Figur 2:: Ein Blockschaltbild einer Datenübertragung zwischen einem Leckortungsgerät und einem Benutzerendgerät.

In einem weit verzweigten Leitungssystem 1 sind eine Vielzahl von sich verzweigenden Wasserleitungen 2, 3 angeordnet, wobei im gezeigten Ausführungsbeispiel der Wasserstrom in den Pfeilrichtungen 4, 5 fließt.

Es sind eine Anzahl von Leckortungsgeräten 9, 10, 11 an unterschiedlichen Stellen des verteilten Leitungssystems 1 angeordnet, wobei im Ausführungsbeispiel angegeben ist, dass das Leckortungsgerät 9-11 jeweils an einem Absperrschieber 6-8 angeschlossen ist.

Hierauf ist die Erfindung nicht beschränkt. Das Leckortungsgerät 9-11 kann auch an anderen Stellen des Leitungssystems 1 angeordnet werden. Jedes Leckortungsgerät 9-11 weist einen akustischen Sensor 12 auf, der zum Abhören des Fließgeräusches am Absperrschieber 6, 7, 8 geeignet ist.

Anstatt eines akustisch wirkenden Sensors können auch andere Sensoren verwendet werden, wie z. B. Ultraschall-Sensoren und andere Ortungssensoren, die geeignet sind, das Fließgeräusch, die Fließgeschwindigkeit oder andere für die Leckortung notwendigen Parameter zu erfassen.

Das Signal des Sensors 12 wird über eine Datenverbindung 18 dem Leckortungsgerät 9-11 zugeführt.

Diese Datenverbindung 18 kann als Kabel oder als drahtlose Datenverbindung ausgebildet sein.

Eine derartige drahtlose Datenverbindung kann eine IR-Schnittstelle, eine Bluetooth-Schnittstelle oder eine andere Nahfeld-Datenübertragung (NFC) sein.

Das Signal vom Sensor 12 wird in einem Messteil 13 aufbereitet und die gesamte Steuerung des Leckortungsgerätes 9-11 am Steuerungsmodul 14, welches als PC oder CPU ausgebildet sein kann.

Wesentlich ist auch, dass der Sensor 12 mit dem Messteil 13 und dem Steuerungsmodul 14 als ASIC ausgebildet sein kann und sich alle genannten Module auf einer einzigen Platine befinden.

Die von dem Steuerungsmodul 14 bereitgestellten Daten werden dann der Sendestufe 15 zugeleitet, die bevorzugt als WLAN-Client ausgebildet ist.

Die drahtlose Kommunikation erfolgt über die Antenne 16 und die Kommunikationsverbindung 17 mit dem Benutzerendgerät 20.

Dieses ist plattformunabhängig ausgebildet und es ist lediglich dargestellt, dass im Benutzerendgerät ein Bildschirm 21 angeordnet ist und gegebenenfalls noch verschiedene andere Betätigungstasten oder eine Tastatur, mit der es möglich ist, die auf dem Bildschirm 21 angezeigten Abbilder 22 der verschiedenen Messstellen noch weiter zu verarbeiten.

Im gezeigten Ausführungsbeispiel ist die Kommunikationsverbindung 17 zwischen dem jeweiligen Leckortungsgerät 9-11 und dem Benutzerendgerät 20 als unidirektionale Schnittstelle ausgebildet.

Hierauf ist die Erfindung nicht beschränkt.

Im Fall einer bidirektionalen Kommunikationsverbindung ist die Antenne am Benutzerendgerät 20 als Sende- und Empfangsantenne 19 ausgestaltet und kann dementsprechend auch Signale an die einzelnen Leckortungsgeräte 9-11 senden und diese beeinflussen.

Es soll noch erwähnt werden, dass es in einer Weiterbildung der Erfindung möglich ist, die einzelnen Sendestufen 15 der Leckortungsgeräte 9-11 routing-fähig auszubilden, was bedeutet, dass wenn beispielsweise ein Leckortungsgerät (z. B. das Leckortungsgerät 11) außerhalb der Funkreichweite des Benutzer-Endgerätes 20 ist, dieses Leckortungsgerät 11 dann seine Daten an ein anderes Leckortungsgerät 9 oder 10 weiterleitet und dieses dann die Daten des Leckortungsgerätes 11 an das Benutzerendgerät 20 weiterleitet.

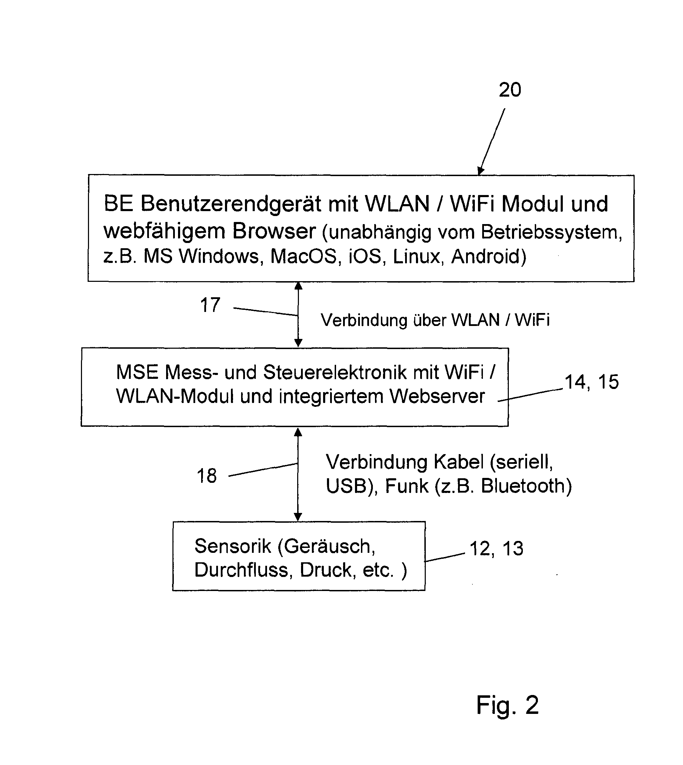

Die Figur 2 zeigt schematisiert das Blockschaltbild der erfindungsgemäßen Anordnung, bei dem wichtig ist, dass das Benutzerendgerät mit einem WLAN-WiFi-Modul und einem webfähig Browser ausgestattet ist und deshalb plattformunabhängig von der jeweiligen Betriebsplattform ist.

### Zeichnungslegende

- 1.: Leitungssystem
- 2.: Wasserleitung
- 3.: Wasserleitung
- 4.: Pfeilrichtung
- 5.: Pfeilrichtung
- 6.: Absperrschieber
- 7.: Absperrschieber
- 8.: Absperrschieber
- 9.: Leckortungsgerät
- 10.: Leckortungsgerät
- 11.: Leckortungsgerät
- 12.: Sensor
- 13.: Meßteil
- 14.: Steuerungsmodul (PC oder CPU)
- 15.: Sendestufe (WLAN/WiFi)
- 16.: Antenne
- 17.: Kommunikationsverbindung
- 18.: Datenverbindung
- 19.: Sende- und Empfangsantenne
- 20.: Benutzer-Endgerät
- 21.: Bildschirm
- 22.: Abbild (a, b, c)

## Patentansprüche

1. Vorrichtung zur Leckortung in einem verzweigten Leitungssystem (1) eines Wassernetzes mit einer Vielzahl von Leckortungsgeräten (9-11), die an verschiedenen Stellen an den Wasserleitungen (2, 3) eine Leckortung, z. B. über eine akustische Erfassung des Strömungsgeräusches und/oder den Druck und/oder den Durchfluss ermöglichen, wobei die Leckortung über mindestens einen Sensor (12) mit einem daran angeschlossenen Meßteil (13) und einem Auswertungsteil (14) erfolgt, und eine Kommunikationsverbindung (17) zur Weiterleitung der erfassten Signale und/oder Daten auf das Display (21) eines Benutzer-Endgerätes (20) vorhanden ist, **dadurch gekennzeichnet, dass** die Kommunikationsverbindung (17) als WLAN-Verbindung zwischen dem Leckortungsgerät (9-11) und dem Benutzer-Endgerät (20) ausgebildet ist, und dem Benutzer-Endgerät (20) ein internetfähiger Webbrowser zugeordnet ist.

2. Vorrichtung nach Anspruch 1, **dadurch gekennzeichnet, dass** im Benutzer-Endgerät (20) ein WLAN/WiFi-Modul und ein damit verbundener webfähiger Browser angeordnet sind.

3. Vorrichtung nach Anspruch 1 oder 2, **dadurch gekennzeichnet, dass** der webfähige Browser im Benutzer-Endgerät (20) unabhängig vom verwendeten Betriebssystem ist.

4. Vorrichtung nach einem der Ansprüche 1 bis 3, **dadurch gekennzeichnet, dass** im Leckortungsgerät (9-11) ein als Server ausgebildetes WLAN-Modul als Sendestufe (15) angeordnet ist.

5. Vorrichtung nach einem der Ansprüche 1 bis 4, **dadurch gekennzeichnet, dass** alle Leckortungsgeräte (9-11) im WLAN-Netz im Ad-hoc-Modus mit dem Benutzer-Endgerät (20) kommunizieren.

6. Vorrichtung nach Anspruch 5, **dadurch gekennzeichnet, dass** das WLAN-Netz im Ad-hoc-Modus betrieben wird und alle Sendestufen (15) denselben Netzwerknamen ("Service Set Identifier", SSID) benutzen und optional dieselben Einstellungen für die Verschlüsselung verwenden.

7. Vorrichtung nach Anspruch 5 oder 6, **dadurch gekennzeichnet, dass** die koordinierende Funktion des WLAN-Netzes von dem einen oder mehreren Endgeräten (12) ausgeführt wird.

8. Vorrichtung nach einem der Ansprüche 1 bis 7, **dadurch gekennzeichnet, dass** die Leckortungsgeräte (9-11) mit Routing-Fähigkeiten ausgestattet sind, so dass sie in der Lage sind, Daten zwischen einzelnen Leckortungsgeräten (9-11) weiterzuleiten, die sich nicht in Sendereichweite zum Benutzer-Endgerät (20) zueinander befinden.

9. Vorrichtung nach einem der Ansprüche 1 bis 8, **dadurch gekennzeichnet, dass** das Benutzer-Endgerät (20) als PC oder Notebook oder als Smartphone oder als Touchpad ausgebildet ist.

10. Vorrichtung nach einem der Ansprüche 1 bis 9, **dadurch gekennzeichnet, dass** das WLAN-Netz nach dem IEEE 802.11a/h - Standard und/oder nach dem IEEE 802.11b/g/n - Standard arbeitet.
